(19) Europäisches Patentamt
European Patent Office
Office européen des brevets

(11) **EP 4 716 346 A1**

(12) **EUROPEAN PATENT APPLICATION**
published in accordance with Art. 153(4) EPC

(43) Date of publication:
**25.03.2026 Bulletin 2026/13**

(21) Application number: **23937445.7**

(22) Date of filing: **15.05.2023**

(51) International Patent Classification (IPC):
***H04W 72/21*** (2023.01)    ***H04W 72/0446*** (2023.01)

(52) Cooperative Patent Classification (CPC):
**H04W 72/0446; H04W 72/21**

(86) International application number:
**PCT/JP2023/018147**

(87) International publication number:
**WO 2024/236701 (21.11.2024 Gazette 2024/47)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **NTT DOCOMO, INC.**
**Tokyo 100-6150 (JP)**

(72) Inventors:
• **TAKAHASHI, Yuki**
**Tokyo 100-6150 (JP)**

• **NAGATA, Satoshi**
**Tokyo 100-6150 (JP)**
• **PI, Qiping**
**Beijing 100190 (CN)**
• **WANG, Jing**
**Beijing 100190 (CN)**
• **CHEN, Lan**
**Beijing 100190 (CN)**

(74) Representative: **Hoffmann Eitle**
**Patent- und Rechtsanwälte PartmbB**
**Arabellastraße 30**
**81925 München (DE)**

(54) **TERMINAL AND COMMUNICATION METHOD**

(57)    This terminal comprises: a control unit which, on the basis of a first uplink signal transmission opportunity which cannot be used for transmission of an uplink signal, generates control information indicating whether a second uplink signal transmission opportunity is used for transmission of the uplink signal or not and a time range in which the second uplink signal transmission opportunity is included; and a transmission unit which transmits the control information to a base station.

```
START
  │
  ▼
GENERATE, BASED ON FIRST UPLINK SIGNAL TRANSMISSION OCCASION
UNUSABLE FOR TRANSMITTING UPLINK SIGNAL, CONTROL INFORMATION
INDICATING WHETHER SECOND UPLINK SIGNAL TRANSMISSION OCCASION IS
USED FOR TRANSMITTING UPLINK SIGNAL, AND TIME RANGE IN WHICH SECOND
UPLINK SIGNAL TRANSMISSION OCCASION IS INCLUDED
  │
  ▼
TRANSMIT GENERATED CONTROL INFORMATION TO BASE STATION
  │
  ▼
END
```

FIG. 14

EP 4 716 346 A1

**Description**

Technical Field

The present disclosure relates to a terminal and a communication method.

Background Art

Long Term Evolution (LTE) has been specified for achieving a higher data rate, lower latency, and the like in a Universal Mobile Telecommunication System (UMTS) network. For a wider bandwidth and higher speed than LTE, a successor system to LTE has also been studied. Examples of the successor systems to LTE include systems called LTE-Advanced (LTE-A), Future Radio Access (FRA), 5th generation mobile communication system (5G), 5G plus (5G+), Radio Access Technology (New-RAT), New Radio (NR), and the like.

In NR, a configuration of a configured grant physical uplink shared channel (CG PUSCH) is defined in Release 16 (for example, Non-Patent Literature (hereinafter, referred to as NPL) 1). The CG PUSCH includes Type 1 CG PUSCH and Type 2 CG PUSCH.

Furthermore, in Release 17, studies have been made for Extended Reality (XR) such as Virtual Reality (VR) and Mixed Reality (MX), and the XR scenarios, requirements, Key Performance Indicators (KPI), and evaluation methods for XR have been discussed. The target requirement for XR is to consider aspects of capacity, latency (delay), mobility, and energy efficiency.

Further, in Release 18, it was agreed to support dynamic indication of an unused (or idle) CG PUSCH occasion ((transmission) opportunity)) using uplink control information (UCI) by a terminal (for example, NPL 2). The term "UTO-UCI" is used as a term referring to UCI that provides information related to an unused CG PUSCH occasion. UTO is an abbreviation for unused transmission occasion.

Citation List

Non-Patent Literature

NPL 1
TS38.331 V16.2.0 (2020-09)
NPL 2
RP-223502 (December 12-16, 2022)

Summary of Invention

While it has been decided to support UTO-UCI in Release 18, there are still parts of details of UTO-UCI that are not yet defined, which is a future study issue.

An aspect of the present disclosure provides a terminal and a communication method that can appropriately report a dynamic indication of an unused uplink signal transmission occasion to a base station.

A terminal according to an aspect of the present disclosure includes: a control section that generates control information based on a first uplink signal transmission occasion unusable for transmitting an uplink signal, the control information indicating whether a second uplink signal transmission occasion is used for transmitting the uplink signal, and a time range in which the second uplink signal transmission occasion is included; and a transmission section that transmits the control information to a base station.

Brief Description of Drawings

FIG. 1 illustrates an example of dual connectivity (DC);
FIG. 2 illustrates an example of PUCCH carrier switching;
FIG. 3 is a diagram illustrating an outline of a Type 1 HARQ-ACK CB;
FIG. 4 is a diagram illustrating an outline of a Type 2 HARQ-ACK CB;
FIG. 5 is a diagram illustrating an example of generation of the Type 1 HARQ-ACK CB;
FIG. 6 is another diagram illustrating an example of generation of the Type 1 HARQ-ACK CB;
FIG. 7 is still another diagram illustrating an example of generation of the Type 1 HARQ-ACK CB;
FIG. 8 is a diagram illustrating an example of determination of a candidate PDSCH reception occasion in Step A-2;
FIG. 9 is a diagram illustrating an exemplary assignment of PUSCHs by TBoMS;
FIG. 10 is a diagram illustrating exemplary CG PUSCHs;
FIG. 11 is diagram illustrating an example of a time duration/range indicated by uplink control information (UTO-UCI);
FIG. 12 is another diagram illustrating the example of the time duration/range indicated by uplink control information (UTO-UCI);
FIG. 13 is still another diagram illustrating the example of the time duration/range indicated by uplink control information (UTO-UCI);
FIG. 14 is a flowchart illustrating an operation example of a terminal according to the present embodiment;
FIG. 15 is a block diagram illustrating an example of a configuration of a base station according to the present embodiment;
FIG. 16 is a block diagram illustrating an example of a configuration of the terminal according to the present embodiment;
FIG. 17 is a diagram illustrating an example of hardware configurations of the base station and the terminal according to an embodiment of the present disclosure; and

FIG. 18 is a diagram illustrating an example of a configuration of a vehicle in an embodiment of the present disclosure.

Description of Embodiments

Hereinafter, an embodiment according to an aspect of the present disclosure will be described with reference to the drawings.

In NR, various technologies for methods called Ultra-Reliable and Low Latency Communications (URLLC) and Industrial Internet of Things (IIoT) have been studied in Release 17. In URLLC, the enhancement of the feedback function of a terminal for Hybrid Automatic Repeat request-Acknowledgement (HARQ-ACK) has been studied. The HARQ-ACK is an example of information on a confirmation response (e.g., acknowledgement) to data received by a terminal. For these study matters for URLLC, supporting dynamic and semi-static PUCCH carrier switching was agreed. Note that, the PUCCH carrier switching may be referred to by another name such as carrier switching for control information transmission.

The PUCCH carrier switching is a technique applied when a base station performs communication via a plurality of cells. Hereinafter, dual connectivity and PUCCH carrier switching, which are examples of communication via a plurality of cells, will be described.

<Dual Connectivity>

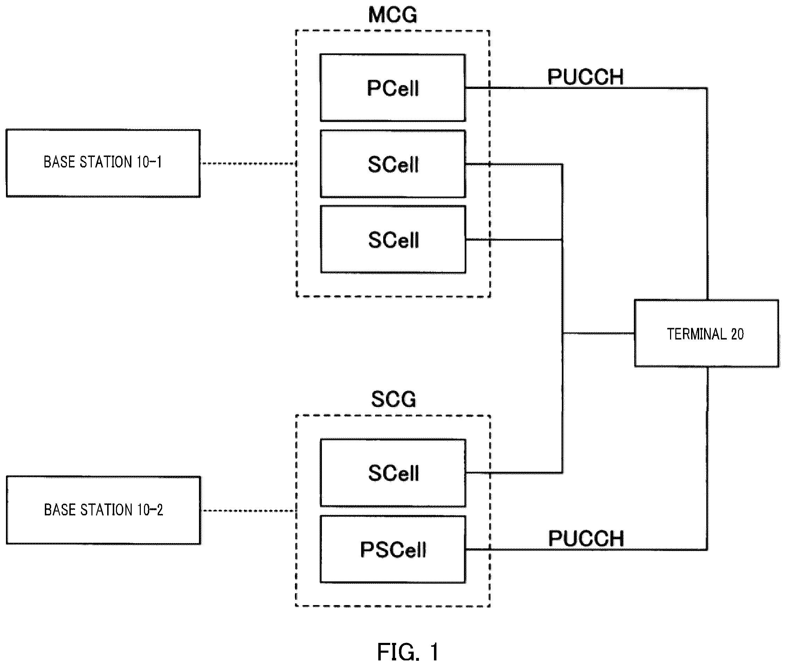

FIG. 1 illustrates an example of dual connectivity (DC). In the example of FIG. 1, base station 10-1 may be a Master Node (MN), and base station 10-2 may be a Secondary Node (SN). In DC, carriers between different base stations are bundled together as illustrated in the example of FIG. 1.

In the example of FIG. 1, base station 10-1 communicates with terminal 20 via a primary cell (Pcell) and secondary cells (Scells). In the example of FIG. 1, terminal 20 has established an RRC connection with base station 10-1.

In DC, delays in communication may occur between base stations 10-1 and 10-2, and thus it is difficult to indicate uplink control information (e.g., Uplink Control Information (UCI)) received in the Pcell of base station 10-1 to base station 10-2 via a backhaul link (e.g., wired or wireless link connecting base stations 10-1 and 10-2) to reflect the uplink control information in scheduling of an Scell under base station 10-2. Then, in DC, in addition to the Pcell of base station 10-1, one carrier under base station 10-2 may be configured as a Primary Scell (PScell), and PUCCH transmission may be supported by the PScell. In this case, terminal 20 transmits UCI to base station 10-2 via the PScell.

In the example of FIG. 1, terminal 20 configures Scells in addition to the Pcell for base station 10-1. Furthermore, terminal 20 configures an Scell in addition to the PScell for base station 10-2. Terminal 20 transmits UCI for each carrier under base station 10-1 via the PUCCH in the Pcell. Furthermore, terminal 20 transmits UCI for each carrier under base station 10-2 via the PUCCH in the PScell. In the example of FIG. 1, a cell group (CG) under base station 10-1 may be referred to as a Master Cell-Group (MCG), and a cell group under base station 10-2 may be referred to as a Secondary Cell-Group (SCG).

When DC is performed, terminal 20 may transmit a PUCCH via a Pcell, PScell, and/or PUCCH-Scell. Generally, terminal 20 is not assumed to transmit a PUCCH via an Scell other than a Pcell, PScell, and PUCCH-Scell.

<PUCCH Carrier Switching>

PUCCH carrier switching has been studied as a method for reducing latency in HARQ-ACK feedback in a Time Division Duplex (TDD) scheme.

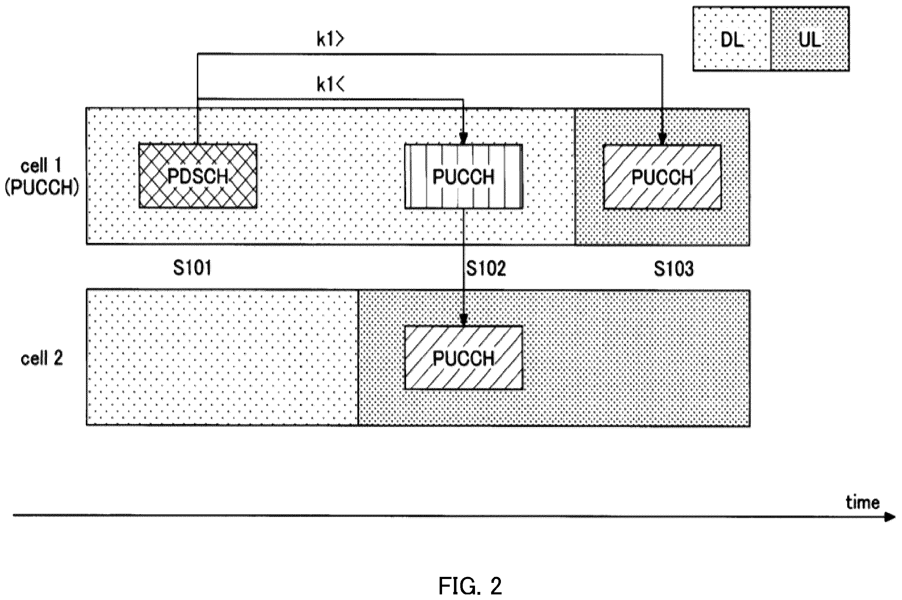

FIG. 2 illustrates an example of PUCCH carrier switching. In the example of FIG. 2, a base station and a terminal communicate with each other via cell 1 and cell 2. In the example of FIG. 2, cell 1 is a Pcell and cell 2 is an Scell. Furthermore, the example of FIG. 2 illustrates a downlink (DL) slot and an uplink (UL) slot in each cell.

In the example of FIG. 2, the terminal receives data (receives Physical Downlink shared Channel (PDSCH)) at a timing of S101. The terminal attempts to transmit an HARQ-ACK for the data received at S101 at a timing of S102, but the slot in cell 1 at the timing of S102 is a downlink (DL) slot. Thus, in a case where the terminal transmits an HARQ-ACK in cell 1, the terminal holds the HARQ-ACK transmission until a PUCCH transmission timing in an uplink (UL) slot (e.g., timing of S103 in FIG. 2), so that latency in HARQ-ACK transmission increases. Note that a PUCCH transmission timing in an uplink (UL) slot may be referred to as a PUCCH occasion.

In the example of FIG. 2, the slot in cell 2 at the timing of S102 is a UL slot. In the example of FIG. 2, the latency in HARQ-ACK transmission can be reduced if the terminal can transmit a HARQ-ACK for the data received at S101 on the PUCCH occasion at the timing of S102 in cell 2. In URLLC, low latency in a radio section is especially required. Thus, in 3GPP (registered trademark), PUCCH carrier switching, in which a terminal switches a carrier for transmitting PUCCH, has been studied as an extension of URLLC technology.

Note that, in the following embodiment, "the same timing" may be completely the same timing or may refer to that all or some of time resources (e.g., one or a plurality of symbol(s) (which may also be resources in time units shorter than a symbol) are the same or overlap.

PUCCH carrier switching may also refer to that, in a case where a terminal attempts to perform PUCCH transmission at a specific transmission timing in a Pcell (which may be PScell or PUCCH-Scell), since the slot in the Pcell (which may be PScell or PUCCH-Scell) at the specific transmission timing is a DL slot, the terminal switches a cell for performing PUCCH transmission from the Pcell (which may be PScell or PUCCH-Scell) to an Scell (which is Scell other than PScell in the case of PScell, and is Scell other than PUCCH-Scell in the case of PUCCH-Scell) of one or a plurality of Scell(s) in which a slot at the same timing as the specific transmission timing is a UL slot. Note that, in an embodiment of the present disclosure, the unit of the specific transmission timing is not limited to a slot. For example, the specific transmission timing may be timing in units of subframes or in units of symbols.

Two methods have been studied for achieving PUCCH carrier switching. The first method is a method in which a base station dynamically indicates a carrier for performing PUCCH transmission to a terminal. The second method is a method in which a base station semi-statically configures a carrier for performing PUCCH transmission for a terminal. Note that, in the example described below, "PUCCH transmission" and "transmitting PUCCH" may refer to transmission of uplink control information via the PUCCH.

A terminal may indicate, to a base station, terminal capability information (UE capability) that specifies information on the capability of the terminal related to PUCCH transmission.

For example, as the UE capability of a terminal, information indicating whether the terminal supports switching between configurations related to transmission of control information may be specified. Switching between configurations related to transmission of control information may be, for example, switching between resources (e.g., carriers or cells) to be used for transmitting control information. Switching between resources to be used for transmitting control information may also be referred to as "PUCCH carrier switching." Furthermore, as the UE capability of a terminal, information indicating application of dynamic PUCCH carrier switching and/or semi-static PUCCH carrier switching may be specified.

A configuration operation of semi-static PUCCH carrier switching may be based on radio resource control (RRC) that has configured a PUCCH cell timing pattern for a PUCCH cell to which the semi-static PUCCH carrier switching is applied. Further, the configuration operation of the semi-static PUCCH carrier switching may be supported between cells with different numerologies.

In the PUCCH carrier switching, PUCCH resources may be configured per Uplink Bandwidth Part (UL BWP) (e.g., per candidate cell and per UL BWP of candidate cell).

In the case of PUCCH carrier switching based on dynamic indication of control information, a K1 value (offset) from a PDSCH to an HARQ-ACK may be interpreted based on the numerology of a target PUCCH cell to be dynamically indicated. The control information may be control information for scheduling a PUCCH, such as downlink control information (DCI). Further, the numerology may be regarded as a slot or subcarrier spacing (SCS).

<HARQ-ACK Codebook>

In URLLC, enhancement of HARQ-ACK Codebook (HARQ-ACK CB) feedback by a terminal has been studied. The following are overviews of Type 1 HARQ-ACK CB and Type 2 HARQ-ACK CB.

A Type 1 HARQ-ACK CB may be referred to as a semi-static HARQ-ACK CB. A Type 2 HARQ-ACK CB may be referred to as a dynamic HARQ-ACK CB. Which of the Type 1 HARQ-ACK CB and the Type 2 HARQ-ACK CB is to be applied may be indicated to a terminal by, for example, higher layer signaling such as RRC.

<Type 1 HARQ-ACK CB>

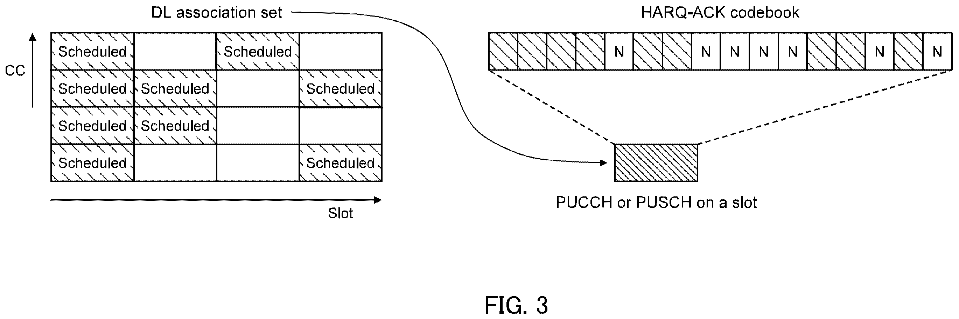

FIG. 3 is a diagram illustrating an outline of the Type 1 HARQ-ACK CB. The "scheduled" shown in FIG. 3 indicates, for example, a slot scheduled by DCI. The "CC" indicates a component carrier.

In the Type 1 HARQ-ACK CB, the terminal generates HARQ-ACK bits for the PDSCH regardless of whether a scheduled slot (PDSCH) is present. For example, the terminal may configure a NACK for the unscheduled PDSCH as illustrated in the "HARQ-ACK codebook" in FIG. 3.

<Type 2 HARQ-ACK CB>

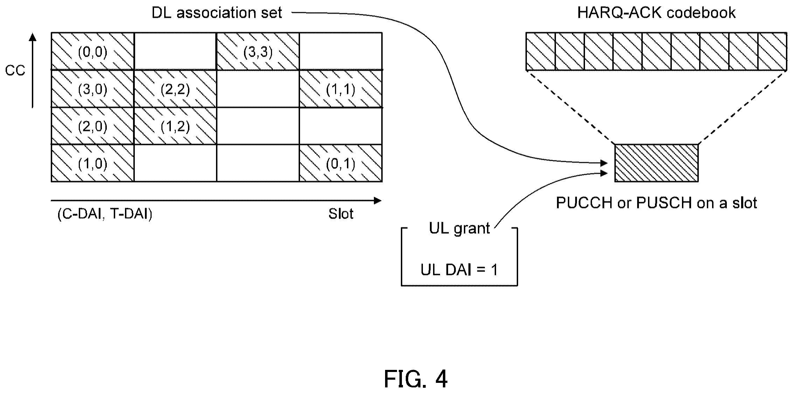

FIG. 4 is a diagram illustrating an outline of the Type 2 HARQ-ACK CB. The (x, y) illustrated in FIG. 4 indicates, for example, a slot scheduled by DCI. The x corresponds to a C-DAI value, and the y corresponds to a T-DAI value. The DAI is an abbreviation for Downlink Assignment Index. The DAI indicates, for example, an assignment of a scheduled PDSCH for which the HARQ-ACK is bundled in the HARQ-ACK CB.

In the Type 2 HARQ-ACK CB, the terminal generates HARQ-ACK bits for the scheduled PDSCHs. For example, the terminal may configure HARQ-ACKs for the scheduled PDSCHs as illustrated in the "HARQ-ACK codebook" in FIG. 4.

The C-DAI is counted up from one. For example, in the case of a two-bit field, the C-DAI is repeated as 1->2->3->0-> and so forth. The C-DAI is counted up for each DCI reception occasion of each CC for every slot, and continues to be counted up from the final value of the previous slot even when the slot changes. The T-DAI indicates the final value of the C-DAI for each slot.

Next, an example of generation of the Type 1 HARQ-ACK CB will be described.

<Generation of Type 1 HARQ-ACK CB >

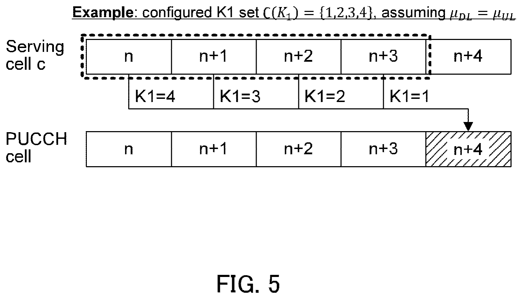

FIGS. 5, 6, and 7 are diagrams illustrating an example of generation of the Type 1 HARQ-ACK CB. In FIG. 5, it is assumed that the numerology of the serving cell and the numerology of the PUCCH cell are the same. In FIG. 5, a set of K1 (offset from PDSCH to HARQ-ACK) is {1, 2, 3, 4}.

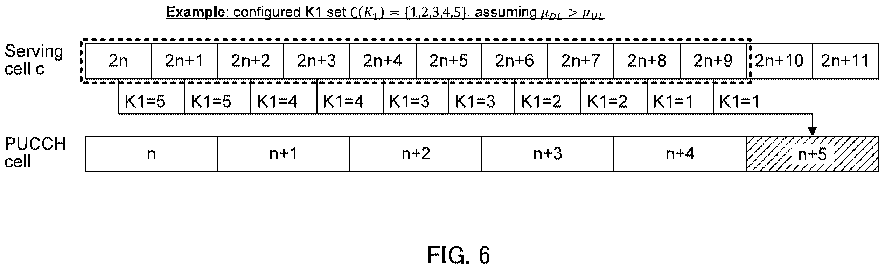

In FIG. 6, it is assumed that the numerology of the serving cell and the numerology of the PUCCH cell are different from each other. In FIG. 6, the set of K1 is {1, 2, 3, 4, 5}.

The terminal may generate a HARQ-ACK CB based on the following Steps A, A-1, A-2, and B.

- Step A

The terminal determines a HARQ-ACK occasion for candidate PDSCH reception. For example, in FIG. 5, the terminal determines the slot of n+4 in the PUCCH cell. For example, in FIG. 6, the terminal determines the slot of n+5 in the PUCCH cell.

- Step A-1

The terminal determines a PDSCH slot window based on the K1 set. For example, the terminal interprets the K1 set in the numerology of the PUCCH cell and determines the PDSCH slot window illustrated by a dotted line frame in FIG. 5 or 6.

- Step A-2

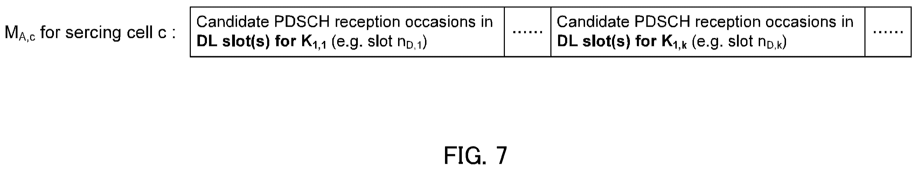

The terminal determines candidate PDSCH reception occasions in each slot for each K1. For example, the terminal determines candidate PDSCH reception occasions in each slot as illustrated in $M_{A,c}$ in FIG. 7.

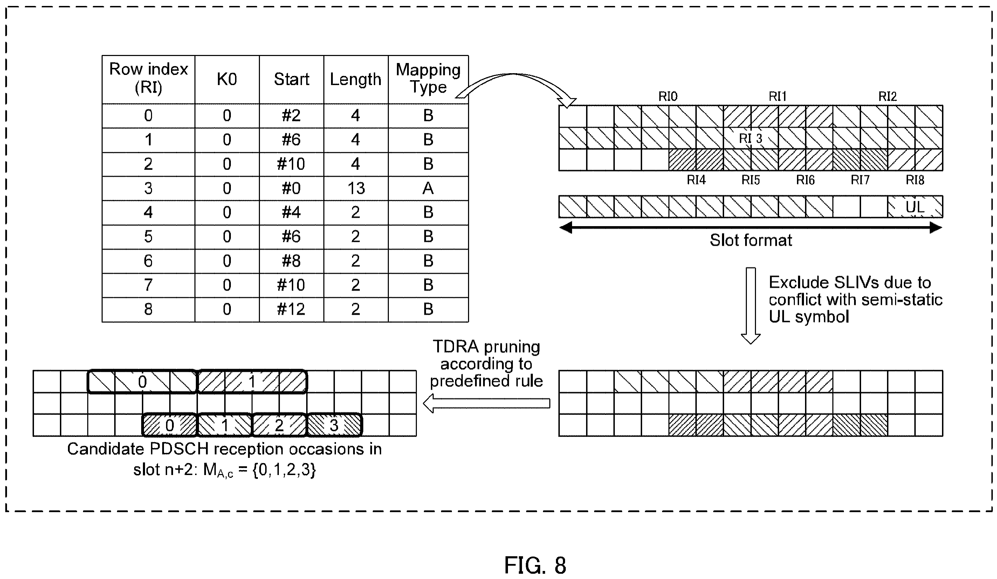

Note that the candidate PDSCH reception occasions, which will be described with reference to FIG. 8, are related to a set Row index (RI) of a Time Domain Resource Allocation (TDRA) table. The candidate PDSCH reception occasion in the TDRA table that overlaps with UL configured by TDD-UL-DL-Configuration-Common and TDD-UL-DL-ConfigDedicated is excluded. Regarding the candidate PDSCH reception occasions overlapping in the time domain, the candidate PDSCH reception occasion is determined based on a specific rule.

- Step B

The terminal may determine (generate) an HARQ-ACK (HARQ-ACK information bits, HARQ-ACK CB) for each element of the determined candidate PDSCH reception occasion. For example, the terminal may generate the following Type-1 HARQ-ACK CB for the total number $O^{ACK}$ of HARQ-ACK information bits.

$$\tilde{O}_0^{ACK}, \tilde{O}_1^{ACK}, ..., \tilde{O}_{O^{ACK}-1}^{ACK} \quad ... \text{(Expression 1)}$$

FIG. 8 is a diagram illustrating an example of determination of the candidate PDSCH reception occasions in Step A-2. The table shown in the upper left of FIG. 8 is an example of TDRA. The "K0" indicates an offset between the slot of DCI and the slot of PDSCH. The "Start" indicates the starting symbol within a slot, and the "Length" indicates the length from the "Start" (the number of symbols allocated to PDSCH). The "Mapping Type" is related to a mapping type that includes information on a symbol configurable as a starting symbol of PDSCH within a slot.

A slot format is illustrated in the upper right of FIG. 8. In the example of the slot format illustrated in FIG. 8, the last two symbols are semi-statically configured as UL.

The candidate PDSCH reception occasions based on TDRA RIs 0 to 8 illustrated in the upper left of FIG. 8 are as shown in the upper right of FIG. 8. However, the candidate PDSCH reception occasions in the TDRA table overlapping with the UL are excluded.

Accordingly, the candidate PDSCH reception occasions for RI 2, RI 3, and RI 8 that overlap with the UL are excluded, and the candidate PDSCH reception occasions in a certain slot are as shown in the lower right of FIG. 8. That is, HARQ-ACKs for RI 2, RI 3, and RI 8 are excluded from the HARQ-ACK CB generation set.

For the candidate PDSCH reception occasions that overlap in the time domain, candidate PDSCH reception occasions are determined based on a specific rule. Therefore, the final candidate PDSCH reception occasions are as shown in the lower left of FIG. 8, and $M_{A,c}$ in a certain slot is $M_{A,c}$ = {0, 1, 2, 3}.

<Transport Block processing over Multiple Slots (TBoMS)>

In Release 17, it was agreed to study coverage enhancement (CE) in NR. In addition, for the coverage enhancement, 3GPP defines TBoMS for transmitting one transport block (TB) through PUSCHs assigned to N (N is plural) slots (for example, Section 9 of 3GPP TS38.213). Note that the transport block size (TBS) is determined based on PUSCH resource elements over N slots.

Section 9 of TS 38.213 defines that, in a case where a terminal transmits a PUSCH over multiple slots and transmits a PUCCH with HARQ-ACK and/or CSI information in one or more slots that overlap with the PUSCH transmission, the terminal multiplexes the HARQ-ACK and/or CSI information in the PUSCH transmission in the one or more slots.

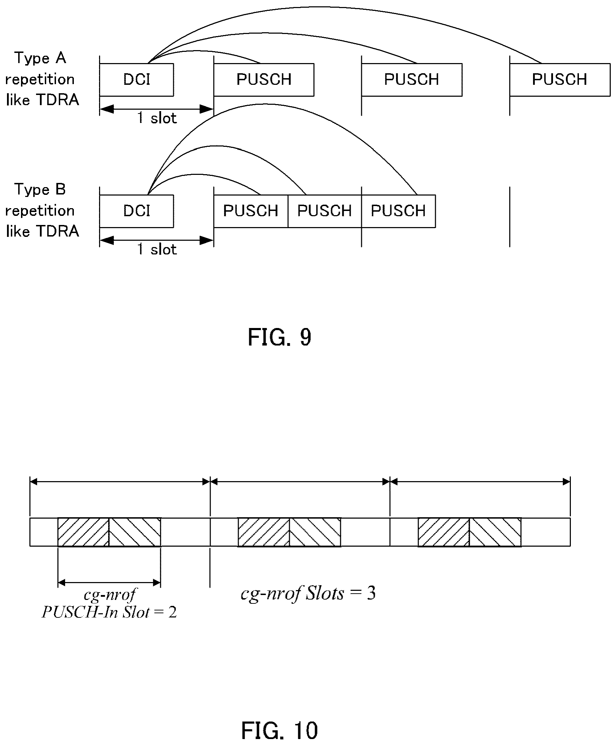

FIG. 9 is a diagram illustrating an example of assignment of PUSCHs by TBoMS. Specifically, FIG. 9 illustrates an example of PUSCH assignment by TBoMS following Type A repetition like Time Domain Resource Allocation (TDRA) and Type B repetition like TDRA. Type A and Type B may mean repetition type A and repetition type B.

The number (N) of slots assigned to one TB is indicated to the terminal by a higher-layer parameter called numberOfSlotsTBoMS.

The same symbol is assigned to each slot.

UCI is multiplexed in the overlapping PUSCH in one slot. The number of encoded and modulated symbols of UCI is calculated based on the coding block size of UL-SCH in the overlapping slot.

TBoMS has the following advantages:

- Resources are allocated across a plurality of slots, thereby reducing the encoding rate (code rate);
- The code sequence length increases, thereby improving the gain of channel coding; and
- The amount of header in the higher layers can be reduced compared to the case of transmitting multiple TBs.

<CG PUSCH>

As mentioned above, in NR, the configuration of CG PUSCH is specified in Release 16 (for example, NPL 1). The CG PUSCH includes Type 1 CG PUSCH and Type 2 CG PUSCH.

- Type 1 CG PUSCH

Transmission parameters for Type 1 CG PUSCH are provided by "configuredGrantConfig," "pusch-Config," and "rrc-ConfiguredUplinkGrant." The activation/deactivation of Type 1 CG PUSCH depends on an RRC-configuration and does not depend on Downlink Control Information (DCI).

- Type 2 CG PUSCH

Transmission parameters for Type 2 CG PUSCH are provided by "configuredGrantConfig," "pusch-Config," and "activation DCI." The activation/deactivation of Type 2 CG PUSCH depends on an RRC-configuration and DCI. One DCI can activate one CG PUSCH and can deactivate a plurality of CG PUSCHs.

As mentioned above, XR has been studied in Release 17, and the target requirements for XR is to consider aspects of capacity, latency, mobility, and energy efficiency. Therefore, it is assumed that CG PUSCH is applied to XR services, and multiple CGs are used for one XR packet transmission.

FIG. 10 is a diagram illustrating an example of the CG PUSCH. The terminal is provided with cg-nrof-Slots and cg-nrofPUSCH-InSlot, which are higher layer parameters. The cg-nrofSlots indicates the number of consecutive slots allocated in a configured CG periodicity. The cg-nrofPUSCH-InSlot indicates the number of consecutive PUSCH allocations in a slot. FIG. 10 illustrates an example in which cg-nrofSlots = 3 and cg-nrofSlots = 2. A period of the CG PUSCH configuration (period in which CG PUSCHs are transmitted, e.g., three slots illustrated in FIG. 10) is repeated with the configured CG periodicity.

The first PUSCH allocation is based on the TDRA of Type 1 CG PUSCH or a higher layer configuration based on TS38.321. Alternatively, the first PUSCH allocation is based on a UL grant received in DCI for Type 2 CG PUSCH. The remaining PUSCH allocations have the same length and mapping type as the first PUSCH. Each PUSCH is added immediately after the previous PUSCH without gaps.

<Agreement>

In Release 18, the following points regarding CG enhancements in XR were agreed.

<Agreement 1>

In the RAN1 #111 meeting, the following agreements are reached regarding supporting of CG enhancements.

<Agreement 1-1>

Dynamic indication of one or more unused CG PUSCH occasions based on Uplink Control Information (UCI) by a terminal is supported.

For example, when an unused CG PUSCH occasion is present, a terminal may indicate the unused CG PUSCH occasion using UCI.

<Agreement 1-2>

Multiple CG PUSCH occasions (multiple CG PUSCHs) in a period of a single CG PUSCH configuration is supported.

For example, in a case where a plurality of CG PUSCHs is configured, a terminal may configure a plurality of CG PUSCH occasions in a period of one of the plurality of CG PUSCH configurations.

<Agreement 2>

Furthermore, in the RAN1 #112bis meeting, the following agreements are reached regarding the dynamic indication of the unused CG PUSCH occasion.

<Agreement 2-1>

Option 1: For a CG PUSCH configuration, UTO-UCI is included in any CG PUSCH that is transmitted (this is Option 1 in corresponding agreement in RAN1#112). However, details are not determined.

<Agreement 2-2>

The UTO-UCI provides a bitmap where a bit corresponds to a CG PUSCH occasion within a time duration/range. The bit indicates whether the CG PUSCH occasion is "unused." However, details including those for the time duration/range are not determined.

<Agreement 2-3>

For dynamic indication of an unused CG PUSCH occasion based on UCI, a CG PUSCH occasion indicated as "unused" by UTO-UCI in a CG PUSCH of a CG PUSCH configuration can be a continuous or discontinuous CG PUSCH occasion (or transmission occasion (TO)) in the time domain. However, whether a time duration/range indicated by the UTO-UCI is limited to a period of a single CG PUSCH configuration is not determined. In addition, whether the unused CG PUSCH occasions can be associated with a plurality of CG PUSCH configurations and how to associate the unused CG PUSCH occasions with the plurality of CG PUSCH configurations are not determined.

Here, the undetermined matters and details for the agreement in RAN1#112 of the selected option remains for future discussion. Furthermore, the above corresponds to Option 2 (w.r.t. agreement in RAN1#112).

<Analysis>

As described above, it was agreed, in RAN1#112bis, that UTO-UCI can indicate a continuous or discontinuous CG PUSCH occasion and that a bitmap corresponds to a single CG PUSCH occasion (TO) within a specific time duration/range. Thus, a terminal can report a dynamic indication of an unused CG PUSCH occasion to a base station using UTO-UCI.

However, in RAN1#112bis, details of the design of the bitmap and the indication content of UTO-UCI such as a time duration/range to be indicated are not agreed, which remain issues for future work.

For example, an effect of a TDD collision on the (indication) content of UCI, including the following points, is not considered and is not clear:

(1) Whether a non-valid or invalid TO caused by a collision with a DL symbol is included in a UTO-UCI indication

(2) Whether a non-valid TO or a non-valid slot/symbol is counted in the number/length of time durations/ranges

Here, the non-valid (or invalid) TO may mean a TO that is not valid to transmit a CG PUSCH (uplink signal), more specifically, a PUSCH transmission occasion that overlaps with a symbol configured as DL by TDD-Config-Common and/or TDD-Config-Dedicated. In addition, the non-valid (or invalid) TO may also mean a PUSCH transmission occasion that overlaps with a symbol configured as a synchronization signal block (SSB) reception. The non-valid (or invalid) TO may be referred to as an uplink signal transmission occasion that is unusable for transmitting an uplink signal such as a CG PUSCH.

A valid TO may have a meaning opposite to the non-valid TO. The valid TO may be referred to as an uplink signal transmission occasion that is usable for transmitting an uplink signal such as a CG PUSCH.

TDD-Config-Common and TDD-Config-Dedicated may be referred to as configuration information for determining, deciding, or judging the non-valid TO (or valid TO), configuration information related to time division duplex (TDD), or the like.

When the dynamic indication of an unused CG PUSCH occasion for which the above-described contents are not made clear cannot be appropriately reported to a base station, the operation of the base station or the terminal may be affected, and a problem in terms of resource utilization efficiency may also arises.

Based on the above analysis, in the present embodiment, proposals considering a TDD collision with UTO-UCI for indicating information related to an unused CG PUSCH occasion will be described below.

In the following, the term "unused" may include the meaning of "not used." The "CG PUSCH occasion" may be referred to as a "CG PUSCH transmission occasion." The "CG PUSCH configuration" may be referred to as a "CG configuration." The "period of the CG PUSCH configuration" may be referred to as a "CG PUSCH period" or a "CG period." The CG period may be periodic. The notation "/" may mean "and/or."

<Proposal Overview>

An overview of a proposal described in the present embodiment is that a non-valid TO may or need not be included in a UTO-UCI indication.

[Option 1]

In Option 1, a non-valid TO (TO that collides with a DL symbol) is not included in a UTO-UCI indication. That is, the terminal need not include the non-valid TO in the UTO-UCI indication.

- Option 1-1

In Option 1-1, a time range indicated by UTO-UCI (hereinafter, referred to as indicated range) does not depend on whether TOs are valid, and both a valid TO and a non-valid TO may be included in the indicated range.

For example, as Example 1, in a case where UTO-UCI indicates bitmap information for a set of TOs (plurality of TOs), a non-valid TO in the set of TOs is included in the UTO-UCI indication and may be skipped for the indication. Specifically, for example, in a case where the number of TOs included in the set of TOs is Y and the number of non-valid TOs in T TOs is n, the length of a bitmap in the UTO-UCI may be (Y-n) bits.

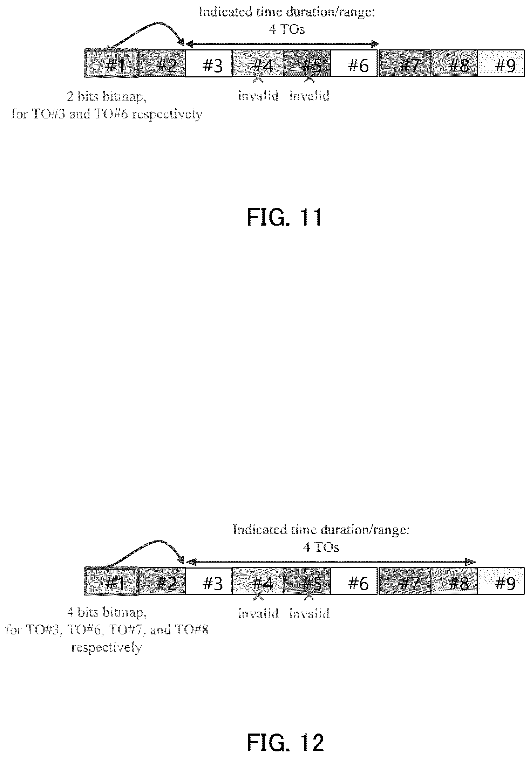

FIG. 11 illustrates an example of a time duration/range indicated by UTO-UCI according to Example 1. In this example, it is assumed that non-valid TOs are TO#4 and TO#5. In addition, in this example, the time duration/range indicated by UTO-UCI is four TOs, and the initial TO of the set of TOs indicated by the UTO-UCI is a TO (TO#3) after one TO from a TO (TO#1) in which the UTO-UCI is transmitted. However, the time duration/range and the initial TO are not limited to the above. In the example illustrated in FIG. 11, the time duration/range indicated by UTO-UCI is four TOs of TO#3, TO#4, TO#5, and TO#6. Since TO#4 and TO#5 that are non-valid TOs are included in the set of TOs, the UTO-UCI indicates 2-bit bitmap information corresponding to TO#3 and TO#6 excluding TO#3 and TO#4 from the set of the TOs.

In addition, for example, as Example 2, in a case where UTO-UCI indicates bitmap information for TOs within Y slots/symbols, a non-valid TO within the Y slots/symbols is included in the UTO-UCI indication and may be skipped for the indication. Specifically, for example, in a case where a bitmap length for Y slots/symbols is Z bits and the number of non-valid TOs within the Y slots/symbols is n, the length of a bitmap in UTO-UCI may be (Z-n) bits.

As described above, a unit of the indicated time duration/range may be a TO (CG PUSCH occasion) unit as in Example 1 or a slot/symbol unit as in Example 2.

As described above, in Option 1-1, the terminal generates, based on a non-valid first TO (n TOs), UTO-UCI for indicating whether a second TO is used for transmitting a CG PUSCH, and a time range (Y TOs, Y slots/symbols, or the like) including the second TO, and transmits the generated UTO-UCI to the base station. The terminal includes the first TO in the time range to be indicated. The terminal generates the UTO-UCI for indicating whether the second TO is used for transmitting the CG PUSCH, by using a bitmap with a bitmap length obtained by subtracting the number of bits equal to the number of the non-valid first TOs from the bitmap length corresponding to the time range.

- Option 1-2

In Option 1-2, the indicated range depends on whether a TO/slot/symbol/CG period is valid. In other words, only a valid TO or the like may be included in the indicated range (non-valid TO or the like need not be included).

For example, as Example 3, in a case where UTO-UCI indicates bitmap information for a plurality of TOs (for example, Y (Y is an integer of two or more) TOs), a non-valid TO need not be included in the count of Y TOs. That is, the range of Y TOs indicated by UTO-UCI may involve a larger gap than Y TOs from the indicated initial TO.

FIG. 12 illustrates an example of a time duration/range indicated by UTO-UCI according to Example 3. Even in this example, it is assumed that non-valid TOs are TO#4 and TO#5. Also in this example, the time duration/range indicated by UTO-UCI is four TOs, and the initial TO of the plurality of TOs indicated by UTO-UCI is a TO (TO#3) after one TO from a TO (TO#1) in which UTO-UCI is transmitted. However, the time duration/range and the initial TO are not limited to the above. In the example illustrated in FIG. 12, the time duration/range indicated by the UTO-UCI is TO#3, TO#6, TO#7, and TO#8 that are four TOs excluding TO#4 and TO#5, which are non-valid TOs, and is larger than the Y (4) TOs (up to TO#6) from the indicated initial TO (TO#3). The UTO-UCI indicates 4-bit bitmap information respectively corresponding to TO#3, TO#6, TO#7, and TO#8.

In addition, for example, as Example 4, in a case where UTO-UCI indicates bitmap information for TOs within Y slots/symbols, a non-valid slot/symbol/CG period (for transmitting CG PUSCH) need not be included in the count of Y slots/symbols. Note that the non-valid slot/CG period may be a slot/CG period including at least one non-valid TO, a slot/CG period including only at least one non-valid TO without including valid TOs, or a slot/CG period in which each symbol is a non-valid symbol (all symbols are non-valid symbols). Here, the non-valid symbol may be a symbol configured as DL by TDD-Config-Common and/or TDD-Config-Dedicated, a symbol configured for SSB reception, a type-0 Common Search Space (CSS) symbol, and/or a Control Resource Set (CORESET)#0 symbol.

As described above, a unit of the time duration/range to be indicated may be a TO (CG PUSCH occasion) unit as in Example 3 or a slot/symbol unit as in Example 4.

As described above, in Option 1-2, the terminal generates, based on a non-valid first TO (n TOs), UTO-UCI for indicating whether a second TO is used for transmitting a CG PUSCH, and a time range (Y TOs or the like) including the second TO, and transmits the generated UTO-UCI to the base station. The terminal does not include (does not count) the first TO in the indicated time range. The terminal generates the UTO-UCI for indicating whether the second TO is used for transmitting a CG PUSCH, by using a bitmap with a bitmap length corresponding to the time range.

Additionally or alternatively, in Option 1-2, the terminal generates, based on a non-valid slot/symbol/CG period, UTO-UCI for indicating whether a TO is used for transmitting a CG PUSCH, and a time range (Y slots/symbols or the like) including the TO, and transmits the generated UTO-UCI to the base station. The terminal does not include (does not count) the non-valid slot/symbol/CG period in the indicated time range. The terminal generates the UTO-UCI for indicating whether the TO is used for transmitting a CG PUSCH, by using a bitmap with a bitmap length corresponding to the time range.

[Option 2]

In Option 2, a non-valid TO (TO that collides with a DL symbol) is included in an UTO-UCI indication. That is, the terminal may include the non-valid TO in the UTO-UCI indication.

For example, as Example 5, in a case where UTO-UCI indicates bitmap information for a set of TOs (plurality of TOs), a non-valid TO in the set of TOs may be included for the UTO-UCI indication. Specifically, for example, in a case where the number of TOs included in the set of TOs is Y, UTO-UCI may indicate bitmap information with a bitmap length of Y bits respectively corresponding to Y TOs, regardless of whether the TOs included in the Y TOs are each a valid TO or a non-valid TO.

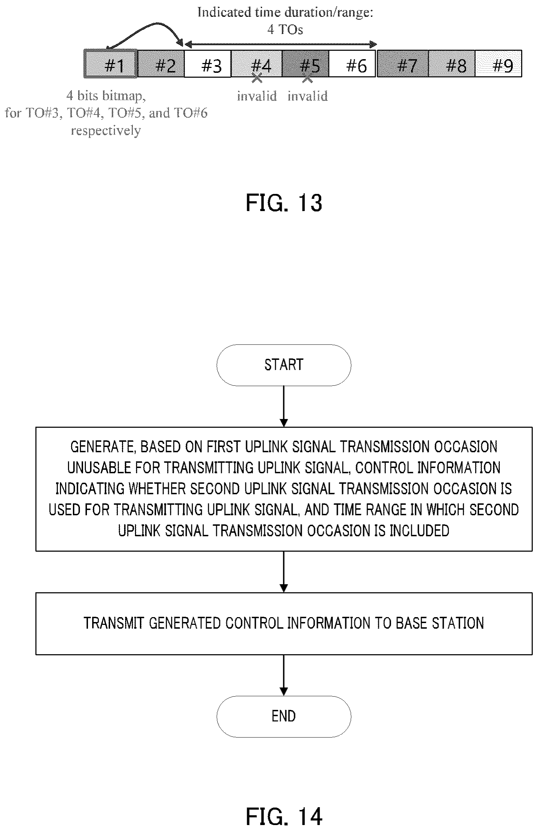

FIG. 13 illustrates an example of a time duration/range indicated by UTO-UCI according to Example 5. In this example, it is assumed that non-valid TOs are TO#4 and TO#5. In addition, in this example as well, the time duration/range indicated by UTO-UCI is four TOs, and the initial TO of the set of TOs indicated by UTO-UCI is a TO (TO#3) after one TO from a TO (TO#1) in which UTO-UCI is transmitted. However, the time duration/range and the initial TO are not limited to the above. In the example illustrated in FIG. 13, the time duration/range indicated by the UTO-UCI is four TOs of TO#3, TO#4, TO#5, and TO#6. The set of TOs includes TO#3 and TO#6, which are valid TOs, and TO#4 and TO#5, which are non-valid TOs. In Example 5, since TOs are included in the indicated range regardless of whether the TOs are valid or not, the UTO-UCI indicates 4-bit bitmap information respectively corresponding to TO#3, TO#4, TO#5, and TO#6 that are the set of TOs.

In addition, for example, as Example 6, in a case where UTO-UCI indicates bitmap information for TOs within Y slots/symbols, a non-valid TO within Y slots/symbols may be included in the UTO-UCI indication. Specifically, for example, in a case where the bitmap length for Y slots/symbols is Z bits, UTO-UCI may indicate bitmap information with a bitmap length of Z bits for Y slots/symbols, regardless of whether TOs included in the Y slots/symbols are each a valid TO or a non-valid TO.

As described above, a unit of the time duration/range to be indicated may be a TO (CG PUSCH occasion) unit as in Example 5 or a slot/symbol unit as in Example 6.

- Variation

As a variation of Option 2, the terminal may always report a TO satisfying the following condition to the base station as "used (in use)/not used (unused)":

- The TO overlaps (collides) with a symbol configured as DL by TDD-Config-Common and/or TDD-Config-Dedicated;
- The TO overlaps with a symbol configured for SSB reception;
- The TO overlaps with a type-0 CSS symbol; and/or
- The TO overlaps with a CORESET#0 symbol. (and/or
- The TO overlaps with a symbol indicated as DL/flexible by a slot format indicator (SFI); and/or
- The TO overlaps with a symbol configured as flexible by TDD-Config-Common and/or TDD-Config-Dedicated, and the terminal is set or configured to monitor the SFI while the terminal has not detected the SFI.)

As described above, in Option 2, the terminal generates, based on a non-valid first TO (n TOs), UTO-UCI for indicating whether a second TO is used for transmitting a CG PUSCH, and a time range (Y TOs, Y slots/symbols, or the like) including the second TO, and transmits the generated UTO-UCI to the base station. The terminal includes the first TO in the indicated time range. The terminal generates the UTO-UCI for indicating whether the second TO is used for transmitting a CG PUSCH, by using a bitmap with a bitmap length corresponding to the time range.

[Variation]

As a variation of the present proposal, regarding a UTO-UCI indication in a CG PUSCH, in a case where there is no valid TO within a time duration/range or in a case where there is no valid TO in the determined set of Y TOs, the terminal need not report (notify, indicate) UTO-UCI in the CG PUSCH. This is because reporting is meaningless since all TOs are non-valid. For example, in FIG. 13, when not only TO#4 and TO#5 but also TO#3 and TO#6 are non-valid TOs, the terminal need not report UTO-UCI in the CG PUSCH (TO#1) as a variation of Option 2.

Meanwhile, the base station transmits the configuration information related to time division duplex to the terminal. The base station receives the above-described UTO-UCI generated and transmitted by the terminal in accordance with the proposal (for example, Options 1, 2, or the like) described above based on the configuration information.

The value of Y or the like may be defined in the specification, may be determined by the base station, or may be determined by the terminal. In a case where the value of Y or the like is determined by the base station, such a value may be configured/indicated via RRC/MAC CE/DCI.

<Operation Example>

Next, an operation example of the terminal will be described with reference to FIG. 14.

In step S11, the terminal generates control information based on a first uplink signal transmission occasion unusable for transmitting an uplink signal. The control information indicates whether a second uplink signal transmission occasion is used for transmitting the uplink signal, and a time range in which the second uplink signal transmission occasion is included.

The uplink signal may be a CG PUSCH. The first uplink signal transmission occasion may be a non-valid TO determined based on the configuration information related to time division duplex transmitted from the base station. Whether the second uplink signal transmission occasion is used for transmitting the uplink signal may be indicated in a bitmap format. The control information may be UTO-UCI.

In step S12, the terminal transmits the control information generated in step S11 to the base station.

<Effect of Proposal>

According to the proposal described above, the terminal reports, to the base station, UTO-UCI based on a non-valid TO. Accordingly, the base station and the terminal can operate appropriately and can efficiently use resources.

<Example of Radio Communication System>

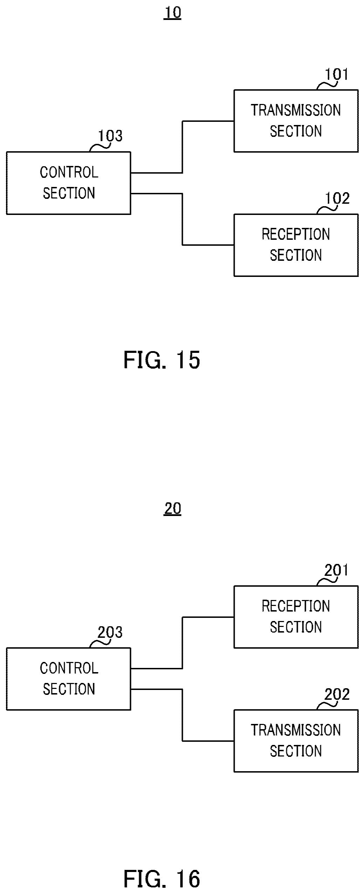

A radio communication system according to the present embodiment includes base station 10 illustrated in FIG. 15 and terminal 20 illustrated in FIG. 16. The number of base stations 10 and the number of terminals 20 are not particularly limited. For example, as illustrated in FIG. 1, the system may include two base stations 10 (base station 10-1 and base station 10-2) that communicate with one terminal 20. The radio communication system may be a radio communication system in accordance with New Radio (NR). Exemplarily, the radio communication system may be a radio communication system conforming to a method called URLLC and/or IIoT.

Note that the radio communication system may be a radio communication system conforming to a method called 5G, Beyond 5G, 5G Evolution, or 6G.

Base station 10 may be referred to as an NG-RAN Node, an ng-eNB, an eNodeB (eNB), or a gNodeB (gNB). Terminal 20 may also be referred to as User Equipment (UE). Base station 10 may be regarded as an apparatus included in a network to which terminal 20 is connected.

The radio communication system may include a Next Generation-Radio Access Network (hereinafter, NG-RAN). The NG-RAN includes a plurality of NG-RAN Nodes, specifically, gNBs (or ng-eNBs), and is connected to a core network (5GC, not illustrated) conforming to 5G. Note that the NG-RAN and the 5GC may be simply referred to as a "network."

Base station 10 executes radio communication with terminal 20. For example, the radio communication to be performed conforms to NR. At least one of base station 10 and terminal 20 may support Massive MIMO (Multiple-Input Multiple-Output) that generates a beam (BM) with higher directivity by controlling radio signals transmitted from a plurality of antenna elements. Further, at least one of base station 10 and terminal 20 may support carrier aggregation (CA) that uses a plurality of component carriers (CCs) bundled together. Moreover, at least one of base station 10 or terminal 20 may support dual connectivity (DC) or the like which enables communication between terminal 20 and each of plurality of base stations 10.

The radio communication system may support a plurality of frequency bands. For example, the radio communication system supports Frequency Range (FR) 1 and FR2. The frequency bands of the respective FRs are, for example, as follows.

- FR1: 410 MHz to 7.125 GHz
- FR2: 24.25 GHz to 52.6 GHz

In FR1, a sub-carrier spacing (SCS) of 15 kHz, 30 kHz, or 60 kHz may be used, and a bandwidth (BW) of 5 MHz to 100 MHz may be used. FR2 is, for example, a frequency higher than FR1. In FR2, an SCS of 60 kHz or 120 kHz may be used, and a bandwidth (BW) of 50 MHz to 400 MHz may be used. FR2 may also include an SCS of 240 kHz.

The radio communication system according to the present embodiment may support a frequency band higher than the frequency band of FR2. For example, the radio communication system according to the present embodiment may support a frequency band exceeding 52.6 GHz and up to 114.25 GHz. Such a high frequency band may be referred to as "FR2x."

In addition, Cyclic Prefix-Orthogonal Frequency Division Multiplexing (CP-OFDM)/Discrete Fourier Transform-Spread-Orthogonal Frequency Division Multiplexing (DFT-S-OFDM) having a sub-carrier spacing (SCS) larger than the above-described example may be applied. The DFT-S-OFDM may be applied to both an uplink and a downlink or may be applied to either one of the uplink and the downlink.

In the radio communication system, a Slot Configuration Pattern of time division duplex (TDD) may be configured. For example, in the slot configuration pattern, a pattern indicating an order of two or more slots among a slot for transmitting a downlink (DL) signal, a slot for transmitting an uplink (UL) signal, a slot in which the DL signal, the UL signal, and a guard symbol are mixed, and a slot in which a signal to be transmitted is flexibly changed may be defined.

Further, in the radio communication system, it is possible to perform PUSCH (or Physical Uplink Control Channel (PUCCH)) channel estimation per slot by using a demodulation reference signal (DMRS), and it is further possible to perform PUSCH (or PUCCH) channel estimation by using DMRSs that are respectively assigned to a plurality of slots. Such channel estimation may be referred to as joint channel estimation or may be referred to by another name, such as cross-slot channel estimation.

Terminal 20 may transmit the DMRSs respectively assigned to a plurality of slots in the plurality of slots such that base station 10 can execute the joint channel estimation using the DMRSs.

Further, in the radio communication system, an enhanced function may be added to the function of feedback from terminal 20 to base station 10. For example, an enhanced feedback function of the terminal for HARQ-ACKs may be added.

Next, configurations of base station 10 and terminal 20 will be described. Note that the configurations of base station 10 and terminal 20 described below are examples of functions related to the present embodiment. Base station 10 and terminal 20 may have functions not illustrated. Further, the functional classification and/or the name of the functional section are/is not limited as long as the functions serve for executing operations according to the present embodiment.

<Configuration of Base Station>

FIG. 15 is a block diagram illustrating an example of a configuration of base station 10 according to the present embodiment. Base station 10 includes, for example, transmission section 101, reception section 102, and control section 103. Base station 10 communicates with terminal 20 by radio (see FIG. 16).

Transmission section 101 transmits a downlink (DL) signal to terminal 20. For example, transmission section 101 transmits the DL signal (for example, configuration information on time division duplex) under the control of control section 103.

The DL signal may include, for example, a downlink data signal and control information (for example, downlink control information (DCI)). Further, the DL signal may include information indicating scheduling related to signal transmission of terminal 20 (for example, UL grant). Further, the DL signal may include higher-layer control information (for example, Radio Resource Control (RRC) control information). The DL signal may also include a reference signal.

Channels used for DL signal transmission include, for example, data channels and control channels. For example, the data channels may include a Physical Downlink Shared Channel (PDSCH), and the control channels may include a Physical Downlink Control Channel (PDCCH). For example, base station 10 transmits control information to terminal 20 using a PDCCH and transmits a downlink data signal using a PDSCH.

The reference signal included in the DL signal may include, for example, at least one of a Demodulation Reference Signal (DMRS), a Phase Tracking Reference Signal (PTRS), a Channel State Information-Reference Signal (CSI-RS), a Sounding Reference Signal (SRS), and a Positioning Reference Signal (PRS) for position information. For example, the reference signals such as the DMRS and the PTRS are used for demodulation of a downlink data signal and are transmitted using a PDSCH.

Reception section 102 receives an uplink (UL) signal transmitted from terminal 20. For example, reception section 102 receives the UL signal (for example, UTO-UCI or the like) under the control of control section 103.

Control section 103 controls communication operations of base station 10 including transmission processing in transmission section 101 and reception processing in reception section 102.

For example, control section 103 acquires information such as data and control information from a higher layer and outputs the information to transmission section 101. Further, control section 103 outputs the data, the control information, and the like received from reception section 102 to a higher layer.

For example, control section 103 allocates a resource (or channel) to be used for DL signal transmission and reception and/or a resource to be used for UL signal transmission and reception, based on the signal (e.g., data, control information, and the like) received from terminal 20 and/or data, control information, and the like acquired from the higher layer. Information on the allocated resource(s) may be included in the control information to be transmitted to terminal 20.

Control section 103 configures a PUCCH resource as an exemplary resource allocation to be used for UL signal transmission and reception. Information on the PUCCH configuration such as a PUCCH cell timing pattern (PUCCH configuration information) may be indicated to terminal 20 by RRC.

<Configuration of Terminal>

FIG. 16 is a block diagram illustrating an exemplary configuration of terminal 20 according to the present embodiment. Terminal 20 includes, for example, reception section 201, transmission section 202, and control section 203. Terminal 20 communicates with base station 10 by radio, for example.

Reception section 201 receives a DL signal transmitted from base station 10. For example, reception section 201 receives the DL signal (for example, configuration information related to time division duplex) under the control of control section 203.

Transmission section 202 transmits a UL signal to base station 10. For example, transmission section 202 transmits the UL signal (for example, UTO-UCI or the like) under the control of control section 203.

The UL signal may include, for example, an uplink data signal and control information (e.g., UCI). For example, information on processing capability of terminal 20 (e.g., UE capability) may also be included. Further, the UL signal may include a reference signal.

Channels used for UL signal transmission include, for example, data channels and control channels. For example, the data channels include a Physical Uplink Shared Channel (PUSCH), and the control channels include a Physical Uplink Control Channel (PUCCH).

For example, terminal 20 receives control information from base station 10 using a PUCCH and transmits an uplink data signal using a PUSCH.

The reference signals included in the UL signal may include, for example, at least one of a DMRS, a PTRS, a CSI-RS, an SRS, and a PRS. For example, the reference signals such as the DMRS and the PTRS are used for demodulation of an uplink data signal and are transmitted using an uplink channel (e.g., PUSCH).

Control section 203 controls communication operations of terminal 20 including reception processing in reception section 201 and transmission processing in transmission section 202.

For example, control section 203 acquires information such as data and control information from a higher layer and outputs the information to transmission section 202. Further, control section 203 outputs, for example, data and control information received from reception section 201 to a higher layer.

For example, control section 203 controls transmission of information to be fed back to base station 10. The information to be fed back to base station 10 may include, for example, a HARQ-ACK, Channel State Information (CSI), and/or a Scheduling Request (SR). The information to be fed back to base station 10 may be included in UCI. The UCI is transmitted on a PUCCH resource.

Control section 203 configures the PUCCH resource based on the configuration information received from base station 10 (e.g., configuration information and/or DCI such as a PUCCH cell timing pattern indicated by RRC). Control section 203 determines the PUCCH resource to be used for transmitting the information to be fed back to base station 10. Under the control of control section 203, transmission section 202 transmits the information to be fed back to base station 10 on the PUCCH resource determined by control section 203.

For example, control section 203 may generate control information based on a first uplink signal transmission occasion unusable for transmitting an uplink signal. The control signal indicates whether a second uplink signal transmission occasion is used for transmitting the uplink signal, and a time range in which the second uplink signal transmission occasion is included. Control section 203 may determine the first uplink signal transmission occasion based on the configuration information related to time division duplex received from base station 10. Control section 203 may or need not include the first uplink signal transmission occasion in the time range. In a case where the terminal includes the first uplink signal transmission occasion in the time range, the control information may indicate whether the second uplink signal transmission occasion is used for transmitting the uplink signal, by using a bitmap with a second bitmap length obtained by subtracting the number of bits equal to the number of the first uplink signal transmission occasions from a first bitmap length corresponding to the time range.

Note that, the channels used for DL signal transmission and the channels used for UL signal transmission are not limited to the examples mentioned above. For example, the channels used for DL signal transmission and the channels used for UL signal transmission may include a Random Access Channel (RACH) and a Physical Broadcast Channel (PBCH). The RACH may be used for, for example, transmission of Downlink Control Information (DCI) including a Random Access Radio Network Temporary Identifier (RA-RNTI).

With the above configuration, terminal 20 can appropriately report a dynamic indication of an unused CG PUSCH occasion to base station 10.

<Summary of Embodiment>

As described above, according to an aspect of the present disclosure, a terminal is provided. The terminal includes: a control section that generates control information based on a first uplink signal transmission occasion unusable for transmitting an uplink signal, the control signal indicating whether a second uplink signal transmission occasion is used for transmitting the uplink signal, and a time range in which the second uplink signal transmission occasion is included; and a transmission section that transmits the control information to a base station.

With the above configuration, the terminal reports, to the base station, the control information indicating whether the second uplink signal transmission occasion is used for transmitting the uplink signal, and the time range in which the second uplink signal transmission occasion is included, based on the first uplink signal transmission occasion that is unusable for transmitting the uplink signal. Accordingly, the terminal can appropriately report a dynamic indication of an unused uplink signal transmission occasion to the base station. This allows the base station and the terminal to appropriately operate and to efficiently use resources.

In one example, the control section includes the first uplink signal transmission occasion in the time range.

With the above configuration, the terminal can easily determine the time range regardless of whether the transmission occasion is valid or not.

In one example, the control information indicates whether the second uplink signal transmission occasion is used for transmitting the uplink signal, by using a bitmap with a second bitmap length obtained by subtracting the number of bits equal to the number of the first uplink signal transmission occasions from a first bitmap length corresponding to the time range.

With the above configuration, only a bit indicating whether the second uplink signal transmission occasion is used for transmitting the uplink signal is transmitted to the base station from the terminal, and thus, an overhead of the control information can be reduced.

In one example, the control section does not include the first uplink signal transmission occasion in the time range.

With the above configuration, the terminal can exclude a transmission occasion that is unusable for transmitting the uplink signal from the time range.

In one example, the terminal further includes a reception section that receives configuration information related to time division duplex from the base station, in which the control section determines the first uplink signal transmission occasion based on the configuration information.

With the above configuration, the terminal can flexibly generate the dynamic indication of the unused uplink signal transmission occasion based on the configuration from the base station.

According to an aspect of the present disclosure, a communication method is provided. The communication method includes: generating, by a terminal, control information based on a first uplink signal transmission occasion unusable for transmitting an uplink signal, the control information indicating whether a second uplink signal transmission occasion is used for transmitting the uplink signal, and a time range including the second uplink signal transmission occasion; and transmitting, by the terminal, the control information to a base station.

With the above configuration, the terminal reports, to the base station, the control information indicating whether the second uplink signal transmission occasion is used for transmitting the uplink signal, and the time range in which the second uplink signal transmission occasion is included, based on the first uplink signal transmission occasion that is unusable for transmitting the uplink signal. Accordingly, the terminal can appropriately report a dynamic indication of an unused uplink signal transmission occasion to the base station. This allows the base station and the terminal to appropriately operate and to efficiently use resources.

<Hardware Structure>

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining software into the apparatus described above or the plurality of apparatuses described above.

Functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

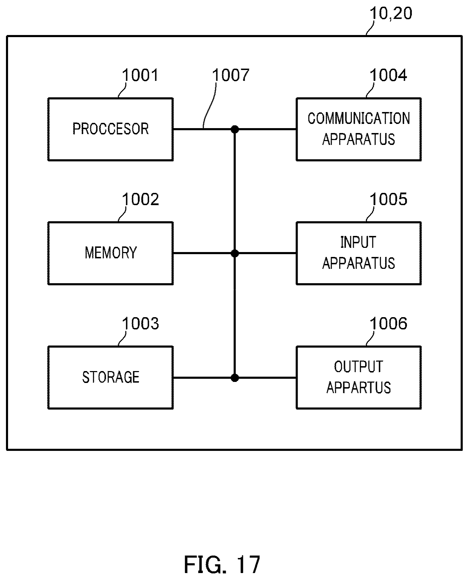

For example, a base station, a terminal, and so on according to one embodiment of the present disclosure may function as a computer that executes the processes of the communication method of the present disclosure. FIG. 17 is a diagram to show an example of a hardware structure of a base station and a terminal according to an embodiment of the present disclosure. Physically, the above-described base station 10 and terminal 20 may each be formed as a computer apparatus that includes processor 1001, memory 1002, storage 1003, communication apparatus 1004, input apparatus 1005, output apparatus 1006, bus 1007, and so on.

Note that in the present disclosure, the words such as an apparatus, a circuit, a device, a section, a unit, and so on can be interchangeably interpreted. The hardware structure of base station 10 and terminal 20 may be configured to include one or more of apparatuses shown in the drawings, or may be configured not to include part of apparatuses.

Each function of base station 10 and terminals 20 is implemented, for example, by allowing certain software (programs) to be read on hardware such as processor 1001 and memory 1002, and by allowing processor 1001 to perform calculations to control communication via communication apparatus 1004 and control at least one of reading and writing of data in memory 1002 and storage 1003.

Processor 1001 controls the whole computer by, for example, running an operating system. Processor 1001 may be configured with a central processing unit (CPU), which includes interfaces with peripheral apparatus, control apparatus, computing apparatus, a register, and so on. For example, at least part of above-described control section 103, control section 203, and so on may be implemented by processor 1001.

Furthermore, processor 1001 reads programs (program codes), software modules, data, and so on from at least one of storage 1003 and communication apparatus 1004, into memory 1002, and executes various processes according to these. As for the programs, programs to allow computers to execute at least part of the operations of the above-described embodiments are used. For example, control section 203 of terminal 20 may be implemented by control programs that are stored in memory 1002 and that operate on processor 1001, and other functional blocks may be implemented likewise. The various processes have been described to be performed by single processor 1001. However, the processes may be performed by two or more processors 1001 simultaneously or sequentially. Processor 1001 may be implemented by one or more chips. It should be noted that the program may be transmitted from a network via a telecommunication line.

Memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. Memory 1002 may be referred to as a "register," a "cache," a "main memory (primary storage apparatus)" and so on. Memory 1002 can store executable programs (program codes), software modules, and the like for implementing the communication method according to one embodiment of the present disclosure.

Storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. Storage 1003 may be referred to as "auxiliary storage apparatus." The above recording medium may be a database including memory 1002 and/or storage 1003, a server, or any other appropriate medium.

Communication apparatus 1004 is hardware (transmitting/receiving device) for allowing inter-computer communication via at least one of wired and wireless networks, and may be referred to as, for example, a "network device," a "network controller," a "network card," a "communication module," and so on. Communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmission section 101, reception section 102, reception section 201, transmission section 202, and the like, may be realized by communication apparatus 1004.

Input apparatus 1005 is an input device that receives input from the outside (for example, a keyboard, a mouse, a microphone, a switch, a button, a sensor, and so on). Output apparatus 1006 is an output device that allows sending output to the outside (for example, a display, a speaker, a Light Emitting Diode (LED) lamp, and so on). Note that input apparatus 1005 and output apparatus 1006 may be provided in an integrated structure (for example, a touch panel).

Furthermore, these types of apparatus, including processor 1001, memory 1002, and others, are connected by bus 1007 for communicating information. Bus 1007 may be formed with a single bus, or may be formed with buses that vary between pieces of apparatus.

Also, base station 10 and terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

(Supplement to Embodiment)

While the embodiment of the present disclosure has been described above, the disclosed invention is not limited to such an embodiment, and a person skilled in the art would understand various variations, modifications, alternatives, substitutions, and the like. Specific numerical examples have been used in the description to facilitate understanding of the invention, but unless otherwise noted, these numbers are merely examples and any suitable values may be used. The classification of the items in the above description is not essential to the present disclosure, and matters described in two or more items may be combined and used as necessary, and matters described in one item may be applied to matters described in another item (as long as they do not contradict each other). The boundaries of the functional sections and processing sections in the functional block diagram do not necessarily correspond to the boundaries of physical components. The operations of a plurality of functional sections may be performed physically by one component, or the operation of one functional section may be performed physically by a plurality of components. The processing procedures described in the embodiment may be performed in a different order as long as there is no contradiction. For convenience of description of the processing, the base station and the terminal have been described using functional block diagrams, but such apparatuses may be implemented in hardware, software, or a combination thereof. Software that operates on a processor included in the base station according to an embodiment of the present disclosure, and software that operates on a processor included in the terminal according to an embodiment of the present disclosure may each be stored in any suitable storage medium, such as a random access memory (RAM), a flash memory, a read-only memory (ROM), an erasable programmable read-only memory (EPROM), an electrically erasable programmable read-only memory (EEPROM), a register, a hard disk (HDD), a removable disk, a CD-ROM, a database, a server, or the like.

<Notification and Signaling of Information>

Notification of information is by no means limited to the embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling), and other signals or combinations of these. Also, RRC signaling may be referred to as an "RRC message," and can be, for example, an RRC connection setup message, an RRC connection reconfiguration message, and so on.

<Application System>

The embodiments illustrated in the present disclosure may be applied to Long Term Evolution (LTE), LTE-Advanced (LTE-A), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New Radio (NR), New radio access (NX), Future generation radio access (FX), W-CDMA (registered trademark), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods, next-generation systems that are enhanced, modified, created, or defined based on these, and the like. A plurality of systems may be combined (for example, a combination of LTE or LTE-A and 5G, and the like) for application.

<Processing Procedure and the like>

The order of processes, sequences, flowcharts, and so on that have been used to describe the aspects/embodiments in the present disclosure may be reordered as long as inconsistencies do not arise. For example, although various methods have been illustrated in the present disclosure with various components of steps in exemplary orders, the specific orders that are illustrated herein are by no means limiting.

<Operation of Base Station>

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these. According to the above, a case is described in which there is a single network node other than the base station. However, a combination of multiple other network nodes may be considered (e.g., MME and S-GW).

<Direction of Input and Output>

The information or signals described in this disclosure may be output from a higher layer (or lower layer) to a lower layer (or higher layer). The information or signals may be input or output through multiple network nodes.

<Handling of Input and Output Information and the like>

The input or output information may be stored in a specific location (e.g., memory) or managed using management tables. The input or output information may be overwritten, updated, or added. The information that has been output may be deleted. The information that has been input may be transmitted to another apparatus.

<Determination Method>

A decision or a determination in an embodiment of the present invention may be realized by a value (0 or 1) represented by one bit, by a boolean value (true or false), or by comparison of numerical values (e.g., comparison with a predetermined values).

<Variations and the like of Aspects>

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

<Software>

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL), etc.) or wireless technologies (infrared, microwave, etc.), at least one of these wired line technologies or wireless technologies is included within the definition of the transmission medium.

<Information and Signals>

Information, a signal, or the like, described in the present specification may be represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

<System and Network>

As used in the present disclosure, the terms "system" and "network" are used interchangeably.

<Names of Parameters and Channels>

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

<Base Station>

In the present disclosure, the terms such as a "base station (BS)," a "radio base station," a "fixed station," a "NodeB," an "eNB (eNodeB)," a "gNB (gNodeB)," an "access point," a "transmission point," a "reception point," a "transmission/reception point," a "panel," a "cell," a "sector," a "cell group," a "carrier," a "component carrier," and so on can be used interchangeably. The base station may be referred to as the terms such as a "macro cell," a "small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be referred to as instructing the terminal to perform any control and/or operation based on the information by the base station.

<Mobile Station>

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

<Base Station/Mobile Station>

At least one of a base station and a mobile station may be referred to as a "transmitting apparatus," a "receiving apparatus," a "radio communication apparatus," and so on. Note that at least one of a base station and a mobile station may be a device mounted on a moving object or a moving object itself, and so on. The moving object is a movable object with any moving speed, and naturally a case where the moving object is stopped is also included. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

Furthermore, the base station in the present disclosure may be interpreted as a terminal. For example, an embodiment of the present disclosure may be applied to the structure that replaces a communication between a base station and a terminal with a communication between a plurality of terminals (for example, which may be referred to as "Device-to-Device (D2D)," "Vehicle-to-Everything (V2X)," and the like). In this case, terminals may have the functions of the base station described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the terminal in the present disclosure may be interpreted as base station. In this case, the base station may have the functions of the terminal described above.

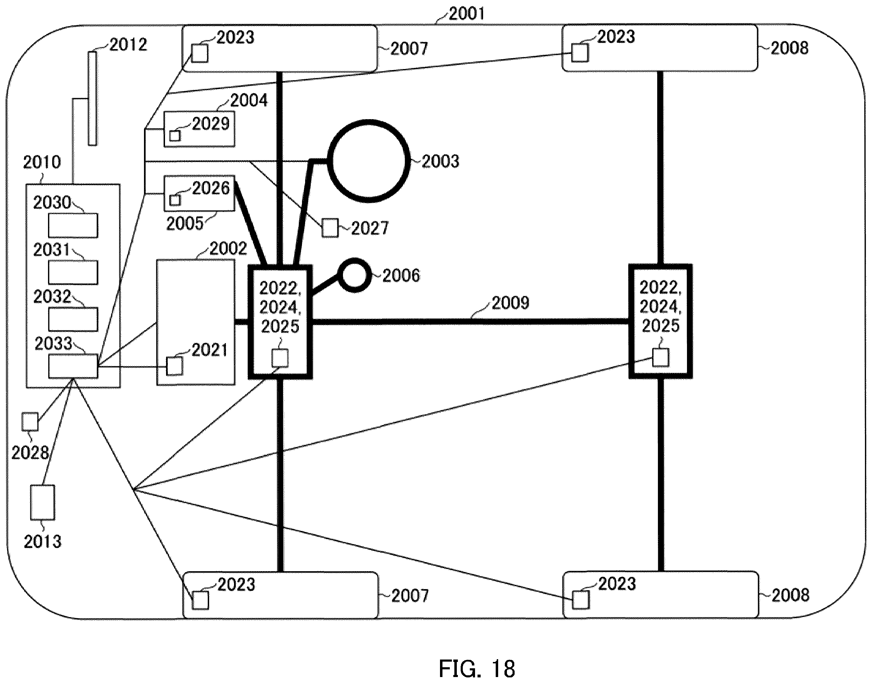

FIG. 18 shows an example of a configuration of vehicle 2001. As shown in FIG. 18, vehicle 2001 includes drive unit 2002, steering unit 2003, accelerator pedal 2004, brake pedal 2005, shift lever 2006, front wheel 2007, rear wheel 2008, axle 2009, electronic control unit 2010, various sensors 2021 to 2029, information service unit 2012, and communication module 2013. The aspects/embodiments described in the present disclosure may be applied to a communication device mounted in vehicle 2001, and may be applied to, for example, communication module 2013.

Drive unit 2002 may include, for example, an engine, a motor, and a hybrid of an engine and a motor. Steering unit 2003 includes at least a steering wheel and is configured to steer at least one of the front wheel or the rear wheel, based on the operation of the steering wheel operated by the user.

Electronic control unit 2010 includes microprocessor 2031, memory (ROM, RAM) 2032, and communication port (IO port) 2033. Electronic control unit 2010 receives signals from the various sensors 2021 to 2029 provided in vehicle 2001. Electronic control unit 2010 may be referred to as an ECU (Electronic control unit).

Signals from various sensors 2021 to 2029 include a current signal from current sensor 2021 which senses the current of the motor, a front or rear wheel rotation signal acquired by revolution sensor 2022, a front or rear wheel pneumatic signal acquired by pneumatic sensor 2023, a vehicle speed signal acquired by vehicle speed sensor 2024, an acceleration signal acquired by acceleration sensor 2025, a stepped-on accelerator pedal signal acquired by accelerator pedal sensor 2029, a stepped-on brake pedal signal acquired by brake pedal sensor 2026, an operation signal of a shift lever acquired by shift lever sensor 2027, and a detection signal, acquired by object detection sensor 2028, for detecting an obstacle, a vehicle, a pedestrian, and the like.

Information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like.

Information service unit 2012 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

Driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, driving support system unit 2030 transmits and receives various types of information via communication module 2013 to realize a driving support function or an autonomous driving function.

Communication module 2013 may communicate with microprocessor 2031 and components of vehicle 2001 via a communication port. For example, communication module 2013 transmits and receives data via communication port 2033, to and from drive unit 2002, steering unit 2003, accelerator pedal 2004, brake pedal 2005, shift lever 2006, front wheel 2007, rear wheel 2008, axle 2009, microprocessor 2031 and memory (ROM, RAM) 2032 in electronic control unit 2010, and sensors 2021 to 2029 provided in vehicle 2001.

Communication module 2013 is a communication device that can be controlled by microprocessor 2031 of electronic control unit 2010 and that is capable of communicating with external devices. For example, various kinds of information are transmitted to and received from external devices through radio communication. Communication module 2013 may be internal to or external to electronic control unit 2010. The external devices may include, for example, a base station, a mobile station, or the like.

Communication module 2013 may transmit at least one of signals from various sensors 2021 to 2029 described above input to electronic control unit 2010, information obtained based on the signals, and information based on an input from the outside (a user) obtained via information service unit 2012, to the external apparatus via radio communication. Electronic control unit 2010, various sensors 2021 to 2029, information service unit 2012, and the like may be referred to as input units that receive input. For example, the PUSCH transmitted by communication module 2013 may include information based on the input.

Communication module 2013 receives various types of information (traffic information, signal information, inter-vehicle information, etc.) transmitted from the external devices and displays the received information on information service unit 2012 provided in vehicle 2001. Information service unit 2012 may be referred to as an output unit that outputs information (for example, outputs information to devices, such as a display and a speaker, based on the PDSCH received by communication module 2013 (or data/information decoded from the PDSCH)). In addition, communication module 2013 stores the various types of information received from the external devices in memory 2032 available to microprocessor 2031. Based on the information stored in memory 2032, microprocessor 2031 may control drive unit 2002, steering unit 2003, accelerator pedal 2004, brake pedal 2005, shift lever 2006, front wheel 2007, rear wheel 2008, axle 2009, and sensors 2021 to 2029 mounted in vehicle 2001.

<Meaning and Interpretation of Terms>

As used herein, the term "determining" may encompasses a wide variety of actions. For example, "determining" may be regarded as judging, calculating, computing, processing, deriving, investigating, looking up or search inquiry (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing, comparing, and the like. That is, "determining" may be regarded as a certain type of action related to determining. Also, "determining" may be replaced with "assuming," "expecting," "considering," and the like.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access." As used in the present disclosure, the two elements may be thought of as being "connected" or "coupled" to each other using at least one of the one or more wires, cables, or printed electrical connections and, as a number of non-limiting and non-inclusive examples, electromagnetic energy having wavelengths in the radio frequency region, the microwave region, and the light (both visible and invisible) region.

<Reference Signal>

A reference signal may be abbreviated as an "RS," and may be referred to as a "pilot" and so on, depending on which standard applies.

<Meaning of "Based On">

The phrase "based on" (or "on the basis of') as used in the present disclosure does not mean "based only on" (or "only on the basis of"), unless otherwise specified. In other words, the phrase "based on" (or "on the basis of') means both "based only on" and "based at least on" ("only on the basis of" and "at least on the basis of").

<"First" and "Second">

Reference to elements with designations such as "first," "second," and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

<Means>

"Means" included in the configuration of each of the above apparatuses may be replaced by "parts," "circuits," "devices," etc.

<Open Form>

In the case where the terms "include," "including" and variations thereof are used in the present disclosure, these terms are intended to be comprehensive in the same way as the term "comprising." Further, the term "or" used in the present specification is not intended to be an "exclusive or."

<Time Units such as TTI, Frequency Units such as RB, and Radio Frame Configuration>

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms.

For example, one subframe may be referred to as a "Transmission Time Interval (TTI)," a plurality of consecutive subframes may be referred to as a "TTI," or one slot or one mini-slot may be referred to as a "TTI." In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot," a "mini-slot," or the like, instead of a "subframe."

Here, a TTI refers to the minimum time unit of scheduling in radio communication, for example. For example, in LTE systems, a base station performs, for user terminals, scheduling of allocating radio resources (such as a frequency bandwidth and transmit power available for each user terminal) in TTI units. Note that the definition of the TTI is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in LTE Rel. 8 to Rel. 12), a "long TTI," a "normal subframe," a "long subframe," a "slot," or the like. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, or the like) may be interpreted as a TTI having a time length exceeding 1 ms, and a short TTI (for example, a shortened TTI or the like) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

An RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG)," a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell," a "carrier," and so on in the present disclosure may be interpreted as a "BWP."

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

<Maximum Transmit Power>

The "maximum transmit power" described in the present disclosure may mean a maximum value of the transmit power, the nominal UE maximum transmit power, or the rated UE maximum transmit power.

<Article>

In the present disclosure, where an article is added by translation, for example "a," "an," and "the," the disclosure may include that the noun following these articles is plural.

<"Different">

In this disclosure, the term "A and B are different" may mean "A and B are different from each other." It should be noted that the term "A and B are different" may mean "A and B are different from C." Terms such as "separated" or "combined" may be interpreted in the same way as the above-described "different."

Industrial Applicability

An aspect of the present disclosure is useful for radio communication systems.

Reference Signs List

10 Base station
20 Terminal
101, 202 Transmission section
102, 201 Reception section

103, 203 Control section

**Claims**

1. A terminal, comprising:

   a control section that generates control information based on a first uplink signal transmission occasion unusable for transmitting an uplink signal, the control information indicating whether a second uplink signal transmission occasion is used for transmitting the uplink signal, and a time range in which the second uplink signal transmission occasion is included; and
   a transmission section that transmits the control information to a base station.

2. The terminal according to claim 1, wherein
   the control section includes the first uplink signal transmission occasion in the time range.

3. The terminal according to claim 2, wherein
   the control information indicates whether the second uplink signal transmission occasion is used for transmitting the uplink signal, by using a bitmap with a certain bitmap length obtained by subtracting a number of bits equal to a number of the first uplink signal transmission occasions from a first bitmap length corresponding to the time range, the certain bitmap length being referred to as a second bitmap length.

4. The terminal according to claim 1, wherein
   the control section does not include the first uplink signal transmission occasion in the time range.

5. The terminal according to claim 1, further comprising a reception section that receives configuration information related to time division duplex from the base station, wherein
   the control section determines the first uplink signal transmission occasion based on the configuration information.

6. A communication method, comprising:

   generating, by a terminal, control information based on a first uplink signal transmission occasion unusable for transmitting an uplink signal, the control information indicating whether a second uplink signal transmission occasion is used for transmitting the uplink signal, and a time range in which the second uplink signal transmission occasion is included; and
   transmitting, by the terminal, the control information to a base station.

BASE STATION 10-1

MCG
PCell
SCell
SCell

PUCCH

TERMINAL 20

PUCCH

SCG
SCell
PSCell

BASE STATION 10-2

FIG. 1

FIG. 2

EP 4 716 346 A1

DL association set

HARQ-ACK codebook

CC

Scheduled | | Scheduled |
Scheduled | Scheduled | | Scheduled
Scheduled | Scheduled | |
Scheduled | | | Scheduled

Slot

N N N N N N N

PUCCH or PUSCH on a slot

EP 4 716 346 A1

FIG. 3

FIG. 4

**Example**: configured K1 set $C(K_1) = \{1,2,3,4\}$, assuming $\mu_{DL} = \mu_{UL}$

| Serving cell c | n | n+1 | n+2 | n+3 | n+4 |
|---|---|---|---|---|---|

| | K1=4 | K1=3 | K1=2 | K1=1 |
|---|---|---|---|---|

| PUCCH cell | n | n+1 | n+2 | n+3 | n+4 |
|---|---|---|---|---|---|

FIG. 5

Example: configured K1 set $C(K_1) = \{1,2,3,4,5\}$, assuming $\mu_{DL} > \mu_{UL}$

FIG. 6

$M_{A,c}$ for sercing cell c :

| Candidate PDSCH reception occasions in **DL slot(s) for $K_{1,1}$** (e.g. slot $n_{D,1}$) | ...... | Candidate PDSCH reception occasions in **DL slot(s) for $K_{1,k}$** (e.g. slot $n_{D,k}$) | ...... |

FIG. 7

| Row index (RI) | K0 | Start | Length | Mapping Type |
|---|---|---|---|---|
| 0 | 0 | #2 | 4 | B |
| 1 | 0 | #6 | 4 | B |
| 2 | 0 | #10 | 4 | B |
| 3 | 0 | #0 | 13 | A |
| 4 | 0 | #4 | 2 | B |
| 5 | 0 | #6 | 2 | B |
| 6 | 0 | #8 | 2 | B |
| 7 | 0 | #10 | 2 | B |
| 8 | 0 | #12 | 2 | B |

RI0    RI1    RI2

RI 3

RI4    RI5    RI6    RI7    RI8

UL

Slot format

Exclude SLIVs due to conflict with semi-static UL symbol

TDRA pruning according to predefined rule

Candidate PDSCH reception occasions in slot n+2: $M_{A,c} = \{0,1,2,3\}$

FIG. 8

EP 4 716 346 A1

Type A
repetition
like TDRA

DCI | PUSCH | PUSCH | PUSCH

|←— 1 slot —→|

Type B
repetition
like TDRA

DCI | PUSCH PUSCH PUSCH

|←— 1 slot —→|

## FIG. 9

cg-nrof
PUSCH-In Slot = 2

cg-nrof Slots = 3

## FIG. 10

Indicated time duration/range:
4 TOs

| #1 | #2 | #3 | #4 | #5 | #6 | #7 | #8 | #9 |

2 bits bitmap,
for TO#3 and TO#6 respectively

invalid  invalid

# FIG. 11

Indicated time duration/range:
4 TOs

| #1 | #2 | #3 | #4 | #5 | #6 | #7 | #8 | #9 |

4 bits bitmap,
for TO#3, TO#6, TO#7, and TO#8
respectively

invalid  invalid

# FIG. 12

Indicated time duration/range:
4 TOs

| #1 | #2 | #3 | #4 | #5 | #6 | #7 | #8 | #9 |

4 bits bitmap,
for TO#3, TO#4, TO#5, and TO#6
respectively

invalid   invalid

## FIG. 13

START

GENERATE, BASED ON FIRST UPLINK SIGNAL TRANSMISSION OCCASION
UNUSABLE FOR TRANSMITTING UPLINK SIGNAL, CONTROL INFORMATION
INDICATING WHETHER SECOND UPLINK SIGNAL TRANSMISSION OCCASION IS
USED FOR TRANSMITTING UPLINK SIGNAL, AND TIME RANGE IN WHICH SECOND
UPLINK SIGNAL TRANSMISSION OCCASION IS INCLUDED

TRANSMIT GENERATED CONTROL INFORMATION TO BASE STATION

END

## FIG. 14

<u>10</u>

101

TRANSMISSION
SECTION

103

CONTROL
SECTION

102

RECEPTION
SECTION

# FIG. 15

<u>20</u>

201

RECEPTION
SECTION

203

CONTROL
SECTION

202

TRANSMISSION
SECTION

# FIG. 16

10,20

```
        1001          1007            1004
    ┌──────────┐          ●      ┌──────────────┐
    │ PROCCESOR│─────────┤│      │ COMMUNICATION│
    └──────────┘         ││      │  APPARATUS   │
                         ││      └──────────────┘
        1002             ││          1005
    ┌──────────┐         ●      ┌──────────────┐
    │  MEMORY  │─────────┤│      │    INPUT     │
    └──────────┘         ││      │  APPARATUS   │
                         ││      └──────────────┘
        1003             ││          1006
    ┌──────────┐         ●      ┌──────────────┐
    │ STORAGE  │─────────┘      │   OUTPUT     │
    └──────────┘                │  APPARTUS    │
                                └──────────────┘
```

FIG. 17

FIG. 18

EP 4 716 346 A1

# INTERNATIONAL SEARCH REPORT

| International application No. |
| --- |
| **PCT/JP2023/018147** |

**A.  CLASSIFICATION OF SUBJECT MATTER**

*H04W 72/21*(2023.01)i; *H04W 72/0446*(2023.01)i
FI:   H04W72/21; H04W72/0446

According to International Patent Classification (IPC) or to both national classification and IPC

**B.  FIELDS SEARCHED**

Minimum documentation searched (classification system followed by classification symbols)

H04W72/21; H04W72/0446

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
| --- | --- | --- |
| A | QUALCOMM INCORPORATED, Capacity Enhancement Techniques for XR, 3GPP TSG RAN WG1 #113 R1-2305351, 13 May 2023<br>entire text | 1-6 |
| A | HUAWEI, HISILICON, Discussion on CG enhancements for XR capacity, 3GPP TSG RAN WG1 #112bis-e R1-2302346, 07 April 2023<br>entire text | 1-6 |

☐ Further documents are listed in the continuation of Box C.   ☐ See patent family annex.

| | |
| --- | --- |
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **29 May 2023** | **13 June 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *TS38.331 V16.2.0*, September 2020

- *RP-223502*, 12 December 2022